# EUROPÄISCHE PATENTANMELDUNG

(11) **EP 0 885 772 A1**
(43) Veröffentlichungstag der Anmeldung: **23.12.1998**
(21) Anmeldenummer: 98110748.5
(22) Anmeldetag: 12.06.1998
(51) Int. Cl.: B60P 3/00

(54) **Transportvorrichtung für im wesentlichen grossflächige Gegenstände**

(30) Priorität: 18.06.1997 DE 29710587 U
(71) Anmelder: Lansing Fahrzeugbau GmbH, 48691 Vreden (DE)
(72) Erfinder: Lansing, Johannes sen., 48691 Vreden (DE)
(74) Vertreter: Stenger, Watzke & Ring Patentanwälte

(57) **Zusammenfassung**

Um eine Vorrichtung für den Transport von im wesentlichen großflächigen Gegenständen mit Fahrzeugen, bestehend aus einem mit wenigstens einer Auflagerfläche (3) und wenigstens einer Anlagefläche (4) einen sich außerhalb des Fahrzeugs (1) erstreckenden Laderaum für die Gegenstände aufspannenden Aufbau bereitzustellen, die überaus einfach und mit geringem Aufwand am Fahrzeug (1) möglichst ohne Verwendung weiterer Hilfsmittel montier- bzw. demontierbar ist, und die hinsichtlich individueller Transportbedürfnisse in großem Maße variierbar und anpaßbar ist, wird eine Vorrichtung vorgeschlagen, die dadurch gekennzeichnet ist, daß der Aufbau mit wenigstens einem Befestigungsmittel einfach handhabbar am Fahrzeug (1) lösbar befestigbar ist.

## Beschreibung

Die vorliegende Erfindung betrifft eine Vorrichtung für den Transport von im wesentlichen großflächigen Gegenständen, insbesondere Glasscheiben, Fassadenelementen und dergleichen, mit Fahrzeugen, bestehend aus einem mit wenigstens einer Auflagerfläche und wenigstens einer Anlagefläche einen sich außerhalb des Fahrzeugs erstreckenden Laderaum für die Gegenstände aufspannenden Aufbau.

Derartige Transportvorrichtungen für großflächige Gegenstände wie Glasscheiben, Fassadenelemente, Türen und dergleichen sind bekannt. Die Vorrichtungen sind meist an der Längsseite des Fahrzeuges angeordnet und - um einen sicheren Halt bzw. eine sichere Verbindung, insbesondere während des Transportes, bereitzustellen - fest am Fahrzeug befestigt. Dazu ist beispielsweise die Anlagefläche der Vorrichtung an der Längsseite des Fahrzeuges angeschraubt, angeschweißt oder angenietet und dergleichen. Somit läßt sich die Vorrichtung gar nicht bzw. nur mit erheblichem Aufwand, beispielsweise durch Lösen der Verschraubungen, vom Fahrzeug lösen.

Die mit den bisher bekannten Transportvorrichtungen versehenen Fahrzeuge sind dadurch hinsichtlich ihrer Verwendungs- bzw. Einsatzmöglichkeiten eingeschränkt, zumindest aber gehandikapt. Da sich die Vorrichtungen - wenn überhaupt - nur mit erheblichem Aufwand vom Fahrzeug lösen lassen, müssen die zu transportierenden, zur Vermeidung von Beschädigungen und dergleichen schwer handzuhabenden Gegenstände beim Be- bzw. Entladen zum Fahrzeug gebracht werden. Damit ist das Be- bzw. Entladen der Transportvorrichtung überaus aufwendig und mühsam.

Auch wenn keine großflächigen und sperrigen Gegenstände transportiert werden sollen, muß bzw. wird die am Fahrzeug festgelegte Transportvorrichtung, insbesondere aufgrund der überaus aufwendigen und unpraktischen Montage bzw. Demontage derselben, am Fahrzeug belassen. Neben einem größeren Energieverbrauch des Fahrzeuges aufgrund der unnötig am Fahrzeug angeordneten Transportvorrichtung, verursacht durch ein größeres mitgeführtes Gewicht und eine strömungsungünstigere Form des mit der Transportvorrichtung versehenen Fahrzeuges, sind auch die Verkehrssicherheit beeinträchtigende Aspekte durch die am Fahrzeug angeordnete Transportvorrichtung gegeben, die im Fall der nicht verwendeten Vorrichtung durch die Möglichkeit einer einfachen Demontage vermeidbar bzw. reduzierbar wären.

Darüber hinaus sind die Variationsmöglichkeiten der bekannten Transportvorrichtungen zur individuellen Anpassung an verschiedene zu transportierende Gegenstände, insbesondere unterschiedlicher Abmessungen, begrenzt. So sind beispielsweise die Ausmaße der Auflager- und der Anlagefläche der bekannten Transportvorrichtungen fest, das heißt nicht variabel. Ferner läßt sich die Position der Auflager- und Anlagefläche der am Fahrzeug festgelegten Transportvorrichtung nicht verändern.

Der vorliegenden Erfindung liegt die **Aufgabe** zugrunde, eine Vorrichtung für den Transport von im wesentlichen großflächigen Gegenständen mit Fahrzeugen, bestehend aus einem mit wenigstens einer Auflagerfläche und wenigstens einer Anlagefläche einen sich außerhalb des Fahrzeugs erstreckenden Laderaum für die Gegenstände aufspannenden Aufbau bereitzustellen, die überaus einfach und mit geringem Aufwand am Fahrzeug möglichst ohne Verwendung weiterer Hilfsmittel montier- bzw. demontierbar ist, und die hinsichtlich individueller Transportbedürfnisse in großem Maße variierbar und anpaßbar ist.

Zur technischen **Lösung** dieser Aufgabe wird eine gattungsgemäße Vorrichtung vorgeschlagen, die dadurch gekennzeichnet ist, daß der Aufbau mit wenigstens einem Befestigungsmittel einfach handhabbar am Fahrzeug lösbar befestigbar ist.

Durch die erfindungsgemäße Ausgestaltung des mit wenigstens einem Befestigungsmittel einfach handhabbar am Fahrzeug lösbar befestigbaren Aufbaus läßt sich die Vorrichtung für den Transport von im wesentlichen großflächigen Gegenständen überaus einfach und mit geringem Aufwand am Fahrzeug montieren bzw. demontieren. Eine einfache Handhabung ist im Sinne der vorliegenden Erfindung gegeben, wenn die Montage bzw. Demontage der Vorrichtung ohne aufwendige und komplizierte Bearbeitungsschritte, beispielsweise Anbringen bzw. Entfernen von übermäßig vielen Verschraubungen, erfolgen kann, oder wenn die Montage bzw. Demontage der Vorrichtung problemlos von ein oder zwei Personen vorgenommen werden kann. Dadurch, daß die erfindungsgemäße Vorrichtung am Fahrzeug lösbar befestigbar ist, erlaubt die Vorrichtung eine Variation und Anpassung an individuelle Transportbedürfnisse.

Gemäß einer vorteilhaften Ausgestaltung der Erfindung ist der Aufbau abnehmbar auf eine Ladefläche des Fahrzeugs aufsetzbar. Dadurch wird die Möglichkeit geschaffen, auch mit lediglich eine Ladefläche aufweisenden Fahrzeugen, insbesondere Anhängern und dergleichen, im wesentlichen großflächige Gegenstände professionell zu transportieren und so Beschädigungen der Gegenstände bzw. deren Oberflächen beim Transport zu vermeiden. Das Einsatz- bzw. Verwendungsspektrum eines derartigen Fahrzeugs, insbesondere eines Anhängers, läßt sich durch Verwendung der erfindungsgemäßen Vorrichtung als Zubehörteil vergrößern. Wesentlich ist dabei, daß eine einfache Umbaufähigkeit der Fahrzeuge durch Verwendung der erfindungsgemäßen Vorrichtung gegeben ist.

Vorteilhafterweise weist der Aufbau eine Rahmenkonstruktion auf, die vorzugsweise mit einem Teil eine Befestigungsfläche und mit einem anderen Teil die Anlagefläche bildend ausgebildet ist. In einer besonders vorteilhaften Ausgestaltung der Erfindung ist die Rohrkonstruktion aus wenigstens zwei im wesentlichen viereckigen und mit wenigstens einem horizontal verlaufenden Rohr verbundenen Rahmenelementen ausgebildet. Dabei stellt eine Seite des Rahmenelementes eine Befestigungsfläche bereit, und eine andere Seite des Rahmenelementes spannt zusammen mit anderen Rahmenelementen gegebenenfalls zusammen mit den horizontal verlaufenden Verbindungsrohren wenigstens teilweise die Anlagefläche auf.

Durch die Rahmenkonstruktion läßt sich der Aufbau überaus einfach aus handelsüblichen Elementen, im vorliegenden Fall aus Rohren unterschiedlicher, vorzugsweise jedoch viereckiger Querschnitte fertigen. Darüber hinaus weist ein derart ausgebildeten Aufbau ein geringeres Gewicht auf, insbesondere bei Verwendung von Aluminium oder Aluminium/Kohlefaser-Kompositionen. Ein geringeres Gewicht ist insbesondere bei der Montage bzw. Demontage der erfindungsgemäßen Vorrichtung, aber auch aus ökonomischen Gründen, beispielsweise zur Senkung des Energieverbrauches, vorteilhaft.

Eine weitere besonders vorteilhafte Ausgestaltung der Erfindung sieht vor, daß die Auflagerfläche zumindest in befestigtem und/oder beladenem Zustand des Aufbaus unterhalb der Rahmenhöhe des Fahrzeug anordbar ist. Da die zu transportierenden Gegenstände beim Be- bzw. Entladen der Transportvorrichtung nicht mehr so hoch gehoben werden müssen, wird das Be- bzw. Entladen der erfindungsgemäßen Transportvorrichtung erheblich erleichtert. Darüber hinaus läßt sich so die Höhe des Fahrzeuges mit Aufbau reduzieren, da durch das Anordnen der Auflagerfläche der erfindungsgemäßen Vorrichtung unterhalb der Rahmenhöhe des Fahrzeuges ansonsten unnutzbarer Laderaum nutzbar gemacht wird. Die Auflagerfläche der erfindungsgemäßen Vorrichtung läßt sich vorteilhafterweise in der Höhe variierbar anordnen. Dazu kann die erfindungsgemäße Vorrichtung beispielsweise Rasten oder verstellbare Schienen aufweisen, in die die Auflagerfläche einhängbar ist. Damit wird die individuelle Anpaßbarkeit an die zu transportierenden Gegenstände und unterschiedliche Fahrzeugtypen erweitert.

Vorteilhafterweise ist die Auflagerfläche einen Winkel zur Ladefläche des Fahrzeugs einnehmend anordbar. Der Winkel ist dabei vorzugsweise ≤ 90°. Dadurch weist die Auflagerfläche gegenüber der Ladefläche des Fahrzeuges eine Neigung auf, die die Standsicherheit der zu transportierenden Gegenstände vergrößert und das Be- bzw. Entladen der erfindungsgemäßen Transportvorrichtung erleichtert. So sind die zu transportierenden Gegenstände beim Be- bzw. Entladen ohne weitere Sicherung der Gegenstände einfach handhabbar. Aufgrund der Neigung der Auflagerfläche sichern sich die Gegenstände durch ihr Eigengewicht im gewissen Maße selbständig. Ebenso kann die Auflagerfläche mit einem Scharnier, einem Haken oder dergleichen versehen sein, so daß die Auflagerfläche beispielsweise bei Nichtgebrauch der erfindungsgemäßen Vorrichtung eingeklappt oder ausgehängt werden kann.

Die Auflagerfläche ist vorteilhafterweise plattenförmig ausgebildet. Dadurch wird eine größere Standfläche für die zu transportierenden Gegenstände bereitgestellt und darüber hinaus eine Beschädigung der zu transportierenden Gegenstände beim Transport bzw. Be- und Entladen reduziert bzw. verhindert. Vorteilhafterweise ist die Anlagefläche wenigstens teilweise plattenförmig ausgebildet, vorzugsweise im an die Auflagerfläche angrenzenden Bereich. Dadurch wird die Eigensteifigkeit der Vorrichtung insbesondere im Auflagerbereich vergrößert. Überdies sind die zu transportierenden Gegenstände durch die plattenförmig ausgebildete Anlagefläche vor Spritzwasser, Steinschlag und dergleichen weitestgehend geschützt. Um diesen Schutz zu vergrößern, weist der von der Auflager- und Anlagefläche gebildete Laderaum der erfindungsgemäßen Vorrichtung in einer weiteren vorteilhaften Ausgestaltung der Erfindung seitliche Begrenzungen auf, die vorzugsweise ebenfalls plattenförmig ausgebildet sind.

Gemäß einer weiteren vorteilhaften Ausgestaltung der Erfindung ist das Befestigungsmittel als Schnellverschluß ausgebildet. Die Montage bzw. Demontage der erfindungsgemäßen Transportvorrichtung läßt sich so weiter vereinfachen. Dabei wird die Vorrichtung durch das Befestigungsmittel sicher und fest mit dem Fahrzeug verbunden, beispielsweise in Rasten oder Schienen oder dergleichen eingesteckt und festgeklemmt. Die Verbindung kann zusätzlich mit Schrauben oder dergleichen arretiert werden. Um eine einfache Demontage der Vorrichtung zu ermöglichen ist es wesentlich, daß die Verbindung der Transportvorrichtung mit dem Fahrzeug einfach und ohne übermäßigen Aufwand gelöst werden kann. Desweiteren ist es wesentlich, daß die zur Arretierung der Verbindung dienenden Schrauben und dergleichen zur Demontage der Vorrichtung nicht vollständig entfernt werden müssen, das heißt, daß ein Lösen der Schrauben und dergleichen zum Ermöglichen der Demontage der Transportvorrichtung ausreichend ist.

Gemäß einer weiteren besonders vorteilhaften Ausgestaltung der Erfindung umfaßt das Befestigungsmittel ein schienenförmig ausgebildetes Nutprofil und einen in das Nutprofil einsetzbaren, das Nutprofil wenigstens zur Befestigung hintergreifenden Verbindungskörper. Vorzugsweise weist das Nutprofil einen C-förmigen Querschnitt auf. Durch das schienenförmige Nutprofil und den in das Nutprofil einsetzbaren Verbindungskörper ist eine einfach handhabbare, leicht lösbare Verbindung geschaffen. Der Verbindungskörper wird in das Nutprofil eingeschoben und hintergreift dabei wenigstens zum Befestigen das Nutprofil, so daß dieser beispielsweise mit Hilfe eines Bolzens, eines Stifts oder dergleichen im Nutprofil festgeklemmt wird. Zusätzlich kann das Befestigungsmittel einen Arretierungsbolzen aufweisen, beispielsweise eine Schraube und dergleichen, die die durch das Nutprofil und den Verbindungskörper bereitgestellte Verbindung sichert. Damit ist ein Befestigungsmittel bereitgestellt, welches die Handhabung bei der Montage bzw. Demontage der erfindungsgemäßen Vorrichtung vereinfacht und die Verwendung weiterer Montage- bzw. Demontage-Hilfsmittel oder -Werkzeuge nicht erforderlich macht.

In einer besonders vorteilhaften Ausgestaltung der Erfindung ist das Nutprofil am Fahrzeug angeordnet. Das Nutprofil ist dabei vorteilhafterweise in der Fahrzeugladefläche eingelassen. Vorzugsweise nimmt das Nutprofil einen rechten Winkel zur Längsseite des Fahrzeuges ein. In einer weiteren vorteilhaften Ausgestaltung der Erfindung ist der Verbindungskörper am Aufbau angeordnet, vorzugsweise am Rahmenelement der Rohrkonstruktion.

Durch diese Ausgestaltung läßt sich die erfindungsgemäße Transportvorrichtung durch einfaches Einschieben in das Nutprofil von der Längsseite des Fahrzeuges her montieren bzw. in umgekehrter Reihenfolge demontieren. Durch das Einschieben des Verbindungskörpers in das Nutprofil wird eine Klemmverbindung bereitgestellt, die die Vorrichtung ohne weitere Hilfsmittel am Fahrzeug befestigt und sichert. Um eine Klemmverbindung zwischen dem Verbindungskörper und dem Nutprofil bereitzustellen kann der Verbindungskörper beispielsweise in dem Nutprofil durch einen Bolzen, einen Stift oder dergleichen aufgespreizt werden. Ebenso sind andere, dem Fachmann an sich geläufige, eine Klemmverbindung bereitstellende Befestigungsmittel verwendbar. Im Rahmen der Erfindung ist es dabei wesentlich, daß eine sichere, auch ohne Hilfsmittel leicht lösbare Verbindung gewährleistet wird.

Weitere Vorteile und Merkmale der Erfindung werden im folgenden anhand eines Ausführungsbeispiels der Erfindung erläutert. Dabei zeigen:
- Fig. 1: eine perspektivische Ansicht eines Ausführungsbeispiels einer auf einem Anhänger montierten erfindungsgemäßen Transportvorrichtung und
- Fig. 2: eine perspektivische Ansicht des Ausführungsbeispiels gemäß Fig. 1 aus einer anderen Blickrichtung.

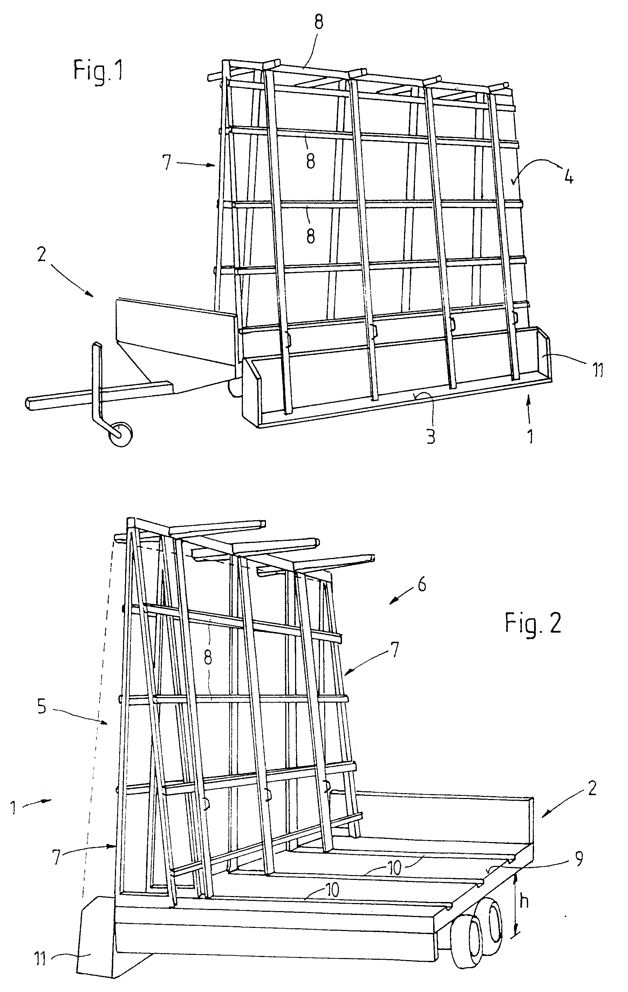

Die Fig. 1 und 2 zeigen jeweils in unterschiedlichen perspektivischen Ansichten einen mit einer Transportvorrichtung 1 versehenen Anhänger 2. Die Transportvorrichtung 1 weist eine Auflagerfläche 3 und eine Anlagefläche 4 auf, die einen sich außerhalb des Anhängers 2 erstreckenden, hier gestrichelt dargestellten Laderaum 5 für die hier nicht dargestellten, zu transportierenden Gegenstände aufspannen.

Dazu umfaßt die Transportvorrichtung 1 einen Aufbau 6, der durch eine Rahmenkonstruktion, bestehend aus mehreren trapezförmigen Rahmenelementen 7, die mit horizontal verlaufenden Rohren 8 verbunden sind, gebildet ist. Die Rohre 8 bilden zusammen mit den mit der Längsseite des Anhängers zugewandten Seiten der Rahmenelemente 7 teilweise die Anlagefläche 4. Um Beschädigungen der zu transportierenden Gegenstände und der Oberflächen zu vermeiden, können die die Anlagefläche 4 bildenden Rohre 8 bzw. die entsprechenden Kanten der Rahmenelemente 7 mit hier nicht dargestellten Schutzelementen, beispielsweise aus Gummi und dergleichen, versehen werden, die aufgesteckt werden oder direkt ausgebildet sind.

Die Transportvorrichtung 1 ist auf der Ladefläche 9 abnehmbar aufgesetzt. Zur Befestigung ist die Ladefläche 9 des Anhängers 2 hier mit einen C-förmigen Querschnitt aufweisenden schienenförmigen Nutprofilen 10 versehen, die in die Ladefläche 9 des Anhängers 2 eingelassen sind und parallel zu den Stirnseiten des Anhängers 2 verlaufen. Zur Befestigung der Transportvorrichtung 1 an dem Anhänger 2 ist diese mit den Rahmenelementen in die Nutprofile 10 eingeschoben. Dazu weisen die Rahmenelemente 7 an ihrer Unterseite einen hier nicht dargestellten Verbindungskörper auf, der beim Einschieben in das Nutprofil 10 durch Einführen eines weiteren Bolzens, Stiftes oder dergleichen im Nutprofil 10 festgeklemmt wird. Durch Entfernen des Bolzens, des Stiftes oder dergleichen und Herausziehen der Rahmenelemente 7 mit den Verbindungskörpern aus den Nutprofilen 10 läßt sich die Transportvorrichtung 1 wieder überaus einfach vom Anhänger 2 demontieren. Ebenso können die Rahmenelemente 7 in eine entsprechend mit Rasten oder dergleichen ausgebildete Schiene eingehängt und befestigt werden.

Wie insbesondere in Fig. 1 zu erkennen, sind die Auflagerfläche 3 und ein Teil der sich an die Auflagerfläche 3 anschließenden Anlagefläche 4 plattenförmig ausgebildet und weisen ebenfalls plattenförmig ausgebildete seitliche Begrenzungen 11 auf. Wie dabei insbesondere in Fig. 2 zu erkennen, ist die Auflagerfläche 3 unterhalb der Rahmenhöhe h angeordnet. Dadurch wird zum einen das Be- bzw. Entladen der Transportvorrichtung 1 erleichtert, da die zu transportierenden Gegenstände beim Be- bzw. Entladen der Transportvorrichtung 1 nicht mehr so hoch gehoben werden müssen, und zum anderen wird ansonsten unnutzbarer Laderaum zugänglich, so daß beispielsweise die Höhe des Fahrzeuges mit Aufbau geringer ausfallen kann. Durch die plattenförmige Ausgestaltung der Auflagerfläche 3, der Anlagefläche 4 und der Begrenzungen 11 ist darüber hinaus ein Schutz der zu transportierenden Gegenstände vor Spritzwasser, Steinschlag und dergleichen gegeben.

Durch das aus Verbindungskörper und Nutprofil 10 bestehende Befestigungsmittel läßt sich die Transportvorrichtung 1 an verschiedenen mit entsprechenden Nutprofilen 10 ausgestatteten Fahrzeugen überaus einfach montieren bzw. demontieren. Entsprechende Nutprofile können auch an der Außenwand eines Fahrzeuges, beispielsweise einem Kleinbus oder dergleichen, angebracht sein. Die Transportvorrichtung 1 weist in diesem Fall an der der Anlagefläche 4 gegenüberliegenden Seite der Rahmenelemente entsprechende Verbindungskörper auf, so daß die Transportvorrichtung in vertikaler Richtung in die Nutprofile 10 eingeschoben und entsprechend durch Verklemmen und Arretieren am Fahrzeug befestigt werden kann. Durch die schienenförmigen Nutprofile 10 besteht darüber hinaus die Möglichkeit, die Transportvorrichtung 1 in den Schienen zu verschieben und so die Position der Transportvorrichtung 1 am Fahrzeug zu verändern, um so individuellen Transportbedürfnissen in noch größerem Maße nachkommen zu können.

Das gezeigte Ausführungsbeispiel offenbart die unterschiedlichsten Möglichkeiten zur Anordnung und Befestigung der Transportvorrichtung 1, ohne auf die konkrete Ausführung beschränkt zu sein.

### Bezugszeichenliste

- 1: Transportvorrichtung
- 2: Anhänger
- 3: Auflagerfläche
- 4: Anlagefläche
- 5: Laderaum
- 6: Aufbau
- 7: Rahmenelement
- 8: Rohr
- 9: Ladefläche
- 10: Nutprofil
- 11: Begrenzung
- h: Rahmenhöhe

## Patentansprüche

1. Vorrichtung für den Transport von im wesentlichen großflächigen Gegenständen, insbesondere Glasscheiben, Fassadenelementen und dergleichen, mit Fahrzeugen, bestehend aus einem mit wenigstens einer Auflagerfläche und wenigstens einer Anlagefläche einen sich außerhalb des Fahrzeugs erstreckenden Laderaum für die Gegenstände aufspannenden Aufbau,
**dadurch gekennzeichnet**,
daß der Aufbau (6) mit wenigstens einem Befestigungsmittel einfach handhabbar am Fahrzeug (2) lösbar befestigbar ist.

2. Vorrichtung nach Anspruch 1, dadurch gekennzeichnet, daß der Aufbau (6) abnehmbar auf eine Ladefläche (9) eines Fahrzeuges (2) aufsetzbar ist.

3. Vorrichtung nach Anspruch 1, dadurch gekennzeichnet daß der Aufbau (6) eine Rahmenkonstruktion (7, 8) aufweist.

4. Vorrichtung nach einem der vorhergehenden Ansprüche, dadurch gekennzeichnet, daß die Auflagerfläche (3) zumindest in befestigtem und/oder beladenem Zustand des Aufbaus (6) unterhalb der Rahmenhöhe (4) des Fahrzeuges (2) anordbar ist.

5. Vorrichtung nach einem der vorhergehenden Ansprüche, dadurch gekennzeichnet, daß die Auflagerfläche (3) einen Winkel zur Ladefläche (9) des Fahrzeuges (2) einnehmend anordbar ist.

6. Vorrichtung nach Anspruch 5, dadurch gekennzeichnet, daß die Auflagerfläche (3) einen Winkel ≤ 90° einnehmend anordbar ist.

7. Vorrichtung nach einem der vorhergehenden Ansprüche, dadurch gekennzeichnet, daß die Auflagerfläche (3) plattenförmig ausgebildet ist.

8. Vorrichtung nach einem der vorhergehenden Ansprüche, dadurch gekennzeichnet, daß die Anlagefläche (4) wenigstens teilweise plattenförmig ausgebildet ist.

9. Vorrichtung nach einem der vorhergehenden Ansprüche, dadurch gekennzeichnet, daß der von der Auflagerfläche (3) und der Anlagefläche (4) gebildete Laderaum (9) seitliche Begrenzungen aufweist.

10. Vorrichtung nach Anspruch 9, dadurch gekennzeichnet daß die Begrenzungen (11) plattenförmig ausgebildet sind.

11. Vorrichtung nach einem der vorhergehenden Ansprüche, dadurch gekennzeichnet daß das Befestigungsmittel ein schienenförmig ausgebildetes Nutprofil (10) und einen in das Nutprofil (10) einsetzbaren, das Nutprofil wenigstens zur Befestigung hintergreifenden Verbindungskörper umfaßt.

12. Vorrichtung nach Anspruch 11, dadurch gekennzeichnet, daß das Nutprofil (10) einen C-förmigen Querschnitt aufweist.

13. Vorrichtung nach Anspruch 11 oder 12, dadurch gekennzeichnet daß das Nutprofil (10) am Fahrzeug (2) angeordnet ist.

14. Vorrichtung nach einem der Ansprüche 11 bis 13, dadurch gekennzeichnet, daß das Nutprofil (10) in der Fahrzeugladefläche (9) eingelassen ist.

15. Vorrichtung nach einem der Ansprüche 11 bis 14, dadurch gekennzeichnet, daß das Nutprofil (10) im wesentlichen senkrecht zur Längsseite des Fahrzeugs (2) angeordnet ist.

16. Vorrichtung nach Anspruch 11, dadurch gekennzeichnet, daß der Verbindungskörper am Aufbau (6) angeordnet ist.

17. Vorrichtung nach einem der vorhergehenden Ansprüche, dadurch gekennzeichnet, daß das Befestigungsmittel eine Klemmverbindung bereitstellt.
